(19) **Europäisches Patentamt / European Patent Office / Office européen des brevets**

(11) **EP 4 125 009 A1**

(12) **EUROPEAN PATENT APPLICATION**

(43) Date of publication:
**01.02.2023 Bulletin 2023/05**

(21) Application number: **21187876.4**

(22) Date of filing: **27.07.2021**

(51) International Patent Classification (IPC):
**G06N 20/00** *(2019.01)*    **G06N 5/00** *(2006.01)*

(52) Cooperative Patent Classification (CPC):
**G06N 20/00;** G06N 5/003

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventor: **Lebacher, Dr. Michael**
**84513 Töging am Inn (DE)**

(54) **COMPUTER-IMPLEMENTED METHOD FOR PROVIDING EXPLANATIONS CONCERNING A GLOBAL BEHAVIOUR OF A MACHINE LEARNING MODEL**

(57)    Computer-implemented method for providing information concerning a global behaviour of a machine learning model (f) trained with measured sensor data representing technical parameters of a technical system (20) and used to evaluate the technical system, comprising
- receiving (M1) the machine learning model (f) and measured sensor data (x) of the technical system (20)
- generating (M2) a number (N) of synthetic sensor data (z) by a synthetic data generator (36),
- predicting (M3) labels (L) for the synthetic sensor data (z) and the measured sensor data (x) by the result of the machine learning model (f) when processing the synthetic sensor data (z) and the measured sensor data (x) as input data,
- training (M4) a surrogate model based on the synthetic sensor data (z) and measured sensor data (x) and the predicted labels, wherein the surrogate model (g) is intrinsically interpretable and provides an explanation of the global behaviour of the machine learning model (f),
- calculating (M5) an agreement accuracy (ACC) indicating the similarity of a result of the surrogate model (g) compared to a result of the machine learning model (f) both processing the same synthetic sensor data (z) and the same measured sensor data(x),
- outputting (M6) to a user interface (33) the trained surrogate model (g) and the agreement accuracy (ACC).

FIG 2

**Description**

The present disclosure relates to an assistance apparatus and a method for adaptive data valuation.

Nowadays, in industrial manufacturing operation monitoring and quality monitoring are performed by data-driven applications, like anomaly detection or classification of quality, based on machine learning models. Sensors are omnipresent in all kinds of heavy machinery and equipment. One especially important application field of sensors is monitoring the functionality of heavy machinery such as pumps, turbines, die casting machines etc. To do so, sensors are installed on these devices and machines and measure different physical parameters such as electrical current, temperature, pressure over time which enables monitoring of the state of the system as a whole. If the machinery is subject to different damages, the sensor data values typically show unusual, suspicious patterns and anomalies in the data which allow to learn machine learning models for detecting these anomalies.

However, there are multiple problems related to detecting anomalies and subsequently failures of the machine from sensor data. Since the status of a machine often depends on various physical parameters and especially depends on combinations of specific parameters, the machine learning model is of complex structure because it has to be trained taking into account time series of sensor data representing all of the various parameters. Further, such learned machine learning (ML) models are called black-box models and are the "logic" behind the provided result is often not transparent and human-understandable. This means that it is not possible to understand globally how sensor data are processed by the machine learning model, and to understand locally how the machine learning model behaves, e.g., how a certain prediction based on a specific input was made by the machine learning model.

These local and especially global understanding are required to optimize a machine learning model and to provide more accurate output for a variety of input data, especially sensor data the machine learning model was not trained on. Further, lack on global and local understanding of the machine learning model leads to problems determining root-causes of detected anomalies and consequently to a lack of trust and acceptance from user side. In operational use, e.g., using the machine learning model for anomaly detection, without knowing the root-cause of the anomaly, an operator of the technical system is merely able to take counter measures or to decide on how to react on such anomalies. Although this is crucial, the requirement of explainability is not satisfied by standard anomaly detection models.

Therefore, it is the object of the present application to provide an assistance apparatus and method that provides information on the global behaviour of a machine learning model with respect to robustness concerning new input data and respective root-causes, i.e., the underlying physical relationships in the technical system to enhance trust of the user in the output of the machine learning model and to optimize the machine learning model, e.g., for a machine learning model used for an anomaly detection.

This object is solved by the features of the independent claims. The dependent claims contain further developments of the invention.

A first aspect concerns a computer-implemented method for providing information concerning a global behaviour of a machine learning model trained with sensor data representing technical parameters of a technical system and used to evaluate the technical system, comprising

- receiving the machine learning model and measured sensor data of the technical system,
- generating a number of synthetic sensor data by a synthetic data generator,
- predicting labels for the synthetic sensor data and the measured sensor data by the result of the machine learning model when processing the synthetic sensor data and measured sensor data as input data,
- training a surrogate model based on the synthetic sensor data and measured sensor data and the predicted labels, wherein the surrogate model is intrinsically interpretable and provides an explanation of the global behaviour of the machine learning model,
- calculating an agreement accuracy indicating the similarity of a result of the surrogate model compared to a result of the machine learning model both processing the same synthetic sensor data and the same measured sensor data,
- outputting to a user interface the trained surrogate model and the agreement accuracy.

In general, a label is assigned to a sensor data and indicates a valuation of the technical system at the time the sensor data was measured. Labelled data, i.e., sensor data and the assigned label, are used to train the machine learning model. The resulting trained model, here the received machine learning model, valuates the technical system depending on the input data and assigns an output of the model, e.g. technical system is in normal, unnormal or in state a, b, c operation state. In the present invention the output of the received machine learning model when processing a synthetic data as input is assigned as label to the respective synthetic data. Such, labels for the synthetic sensor data are generated which are used together with measured sensor data to train the surrogate model. As the surrogate model is trained with measured sensor data, at least partly, it represents the technical system similar to the received machine learning model. Preferably the measured sensor data used to train the surrogate model have also been used to train the machine learning model. Using the same measured sensor data for training the machine learning model and the surrogate model leads to a maximum similarity of the received machine learning model and surrogate model. The surrogate model is an alternative model approximating the received machine learning model, but it is comprehensive and human-understandable by its intrinsically interpretable structure. Thus, the trained surrogate model provides a global explanation on the various decisions taken in the surrogate model which leads to the provided output value of the surrogate model. Therefore, it provides a global information and understanding on how the received machine learning model processes and interprets data. It further provides a local, specific explanation for an individual data instance processed by the received machine learning mode. The agreement accuracy provides a measure on how close the output of surrogate model approximates the output of the received machine learning model and subsequently provides a measure on how close the decision path of the surrogate model is to the received machine learning model. The method is model agnostic, i.e., it provides information on the decision path independent on the type of machine learning model, e.g., for regression models and classification models, such as Convolutional neural networks.

In an embodiment of the method, the synthetic sensor data are generated randomly and adapted to a distribution of the measured sensor data.

This ensures the synthetic sensor data to show a similar distribution as the measured sensor data and provides a close approximation to the measured sensor data. E.g., measured time series of several different sensors are analysed with respect to each of their distribution over time. The same distribution is applied to generate synthetic data by the Monte Carlo simulator.

According to a further embodiment of the method, a subset of the number of synthetic sensor data is combined with a subset of measured sensor data to form surrogate training data used for training the surrogate model.

Synthetic data have not been used for training the received machine learning model but allow to explore the underlying received machine learning model. Exploring is achieved by predicting labels for the synthetic data and using them to train the surrogate model.

According to a further embodiment of the method, different subset of the number of synthetic sensor data is combined with a different subset of measured sensor data to form surrogate test data used for calculating the agreement accuracy.

The different subset of synthetic sensor data was not used to train the surrogate model, but it is used to evaluate whether the explanations derived from the surrogate model for the received machine learning model also hold for 'new' sensor data points. Further, a mixture of synthetic sensor data and measured sensor data allows to analyse the surrogate model with respect to its robustness on data not seen by the algorithm during training.

According to a further embodiment of the method, the surrogate training data and surrogate test data is transformed into an interpretable form of the sensor data.

This further increases the interpretability of the sensor data, the surrogate model and subsequently the received machine learning model and the monitored technical system. Measured sensor data are often modified and transformed by components of the technical system, like a filter unit, and output in a form which is not directly interpretable by a user. Applying a back-transformation to the measured sensor data, the measured sensor data and the output of the generated surrogate model provides direct insight to technical parameters of the technical system.

According to a further embodiment of the method, the surrogate model and the agreement accuracy is calculated and output for a varied number of generated synthetic sensor data.

This allows to determine a minimum number of synthetic sensor data required to train a surrogate model which approximates the output of the received machine learning model with a required specific agreement accuracy value. This allows to generate the surrogate model with the minimum number of synthetic sensor data and consequently limits the processing effort to generate the surrogate model. This allows optimizing the required processing power of an assistance apparatus generating the surrogate model.

According to a further embodiment of the method, the surrogate model is configured to comply with a predefined complexity index and the surrogat model is trained and the agreement accuracy is calculated for different predefined complexity index and output to the user interface.

This allows assessing and optimizing the complexity of the surrogate required to approximate the received machine learning model with desired accuracy. This further enables the method to be applied and adapted to a variety of machine learning models, e.g., to Convolutional Neural Networks.

According to a further embodiment of the method, the surrogate model is one of a Decision Tree model, a Generalized Linear Rule Model, a Logistic Regression, a Generalized Additive Model, if the machine learning model is classification model or the surrogate model is one of a Generalized Linear Rule Models, Linear Regression, Generalized Additive Models, if the machine leaning model is a regression model.

The decision or regression tree provides a set of human-interpretable "if-then"- rules that are easily interpretable and provides the global behaviour of the received machine learning model. Local interpretation, i.e., how a decision for a certain instance of sensor data was reached, is also provided by the "if-then" rules path of the given instance of sensor data.

According to a further embodiment of the method, a visualization of the trained surrogate model is output to a user interface indicating a decision path for an input measured sensor data or synthetic sensor data.

The visualization of the trained surrogate model, e.g., the decision path of the surrogate model, for measured and/or synthetic sensor data as input data can be used to evaluate the similarity of behaviour between the surrogate model and the received machine learning model for correctness. The visualization of the output of the surrogate model processing new measured sensor data as input, which were not used to train the received machine learning model provides an explanation for an output of the received machine learning model when processing the same new measured sensor data. This output can be used to confirm the output of the received machine learning model and/or to initiate measures to the technical system depending on the outputted visualization.

According to a further embodiment of the method, a visualization of the agreement accuracy, preferably depending on a range of number of synthetic sensor data and/or range of complexity index is output to a user interface.

The visualization provides a profound and comprehensive overview on the surrogate model depending on the number of synthetic sensor data and its complexity index. The visualization enables a quick and efficient selection of parameters for the surrogate model, which is applied to support a user of the received machine learning model in evaluating the technical system.

According to a further embodiment of the method, an optimization parameter is derived from the surrogate model and the agreement accuracy and the derived optimization parameter is applied to the machine learning model generating an improved machine learning model, wherein the improved machine learning model is applied to currently measured sensor data.

Therefore, the received machine learning model can be fast and continuously optimized and applied to evaluate measured sensor data of the technical system.

According to a further embodiment of the method, a currently measured sensor data is received and the result of the machine learning model and the trained surrogate model both processed with the currently measured sensor data as input is output to the user interface.

This provides an instant explanation of an evaluation, e.g., normal or anormal status of the technical system output by the received machine learning model.

According to a further embodiment of the method, a currently measured sensor data is received, and the result of the trained surrogate model is output instead of the machine learning model with the currently measured sensor data as input.

This means, that the received machine learning model is replaced by the surrogate model. Consequently, the provided evaluation of the technical system is interpretable to a user. As the surrogate model is based on intrinsically interpretable models usually are of lower complexity and require less processing capacity, the assistance apparatus executing the method requires less processing capacity or can provide the output faster.

According to a further embodiment of the method, the machine learning model is applied to detect anormal behaviour of the technical system and the technical system is one of a device of a manufacturing plant, a device of an distribution system or any kind of heavy machinery.

A second aspect concerns an assistance apparatus for providing explanations concerning a global behaviour of a machine learning model trained with measured sensor data representing technical parameters of a technical system and used to evaluate the technical system, comprising at least one processor configured to perform the steps

- receiving the machine learning model and measured sensor data of the technical system,
- generating a number of synthetic sensor data by a synthetic data generator,
- predicting labels for the synthetic sensor data and the measured sensor data by the result of the machine learning model when processing the synthetic sensor data and the measured sensor data as input data,
- training a surrogate model based on the synthetic sensor data and measured sensor data and the predicted labels, wherein the surrogate model is intrinsically interpretable and provides an explanation of the global behaviour of the machine learning model,
- calculating an agreement accuracy indicating the similarity of a result of the surrogate model compared to a result of the machine learning model both processing the same synthetic sensor data and the same measured sensor data,
- outputting to a user interface the trained surrogate model and the agreement accuracy.

Preferably, the synthetic data generator is a Monte Carlo Simulator generating random data aligned to a data distribution aligned with the measured sensor data. The synthetic data generator can also be configured to apply various genetic algorithms in order to obtain synthetic data of desirable properties, e.g., synthetic data that always or never lead to an anomaly.

A third aspect concerns a computer program product directly loadable into the internal memory of a digital computer, comprising software code portions for performing the steps as described before, when said product is run on said digital computer.

The invention will be explained in more detail by reference to accompanying figures. Similar objects will be marked by the same reference signs.

Figure 1    schematically illustrates an embodiment of the inventive computer-implemented method by a flow diagram.

Figure 2    schematically illustrates in more detail the processing steps for generating a surrogate model and assessing the proximity to the received machine learning model by a flow diagram.

Figure 3    schematically illustrates an embodiment of the inventive assistance apparatus in form of a block diagram.

Figure 4    schematically illustrates an embodiment of a visualization of the surrogate model providing an interpretable decision path as output to the user interface.

Figure 5    schematically illustrates a first embodiment of a visualization of the agreement accuracy.

Figure 6    schematically illustrates a second embodiment of a visualization of the agreement accuracy.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor, firmware or by software, and/or by a combination of dedicated hardware and firmware and software. It is further noted that each functional unit described for an apparatus can perform a functional step of the related method.

Sensors are omnipresent in all kinds of technical systems, like manufacturing devices, equipment in distribution systems and heavy machinery. One especially important application field of sensors is monitoring the functionality of heavy machinery such as pumps, turbines, die casting machines etc. Sensors are installed on these technical systems and measure different physical parameters such as current, temperature, pressure mainly over time providing for each of the different sensors measured sensor data, e.g., time series of measured sensor data, which enables monitoring of the state of the technical system as a whole. If the technical system is subject to different damages, the measured sensor data values typically show suspicious patterns and anomalies in the data which allow to train machine learning algorithms for detecting these anomalies. Often several different parameters are monitored at the same time, having complex data structure and even more complex interrelations the learned machine learning model is complex, often called black-box algorithms. Subsequently the output of the trained machine learning model is hardly interpretable. This means that it is not possible to understand how the model behaves globally, i.e., how the trained machine learning model itself does process data in general, and locally, i.e., how a certain prediction was made.

The proposed computer-implemented method and assistance apparatus provides a flexible global and robust explanation for the behavior of a machine learning based system evaluating the technical system, e.g., an anomaly detection system, that indicates the underlying physical relationships of the technical system. The proposed method and assistance apparatus is generic and not limited to the usage of anomaly detection but also works for any kind of supervised or unsupervised Machine Learning models based on classification and regression models.

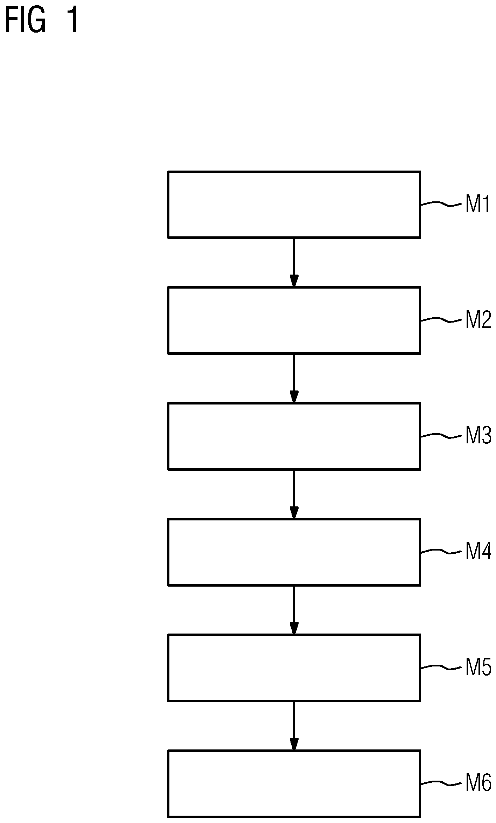

Figure 1 shows an embodiment of the inventive computer-implemented method by a flow diagram.

The computer-implemented method provides information concerning a global behaviour of a machine learning model f trained with measured sensor data, which represent technical parameters of a technical system and which are used to evaluate the technical system. In a first step M1 of the method a machine learning model f which is trained for the technical system and measured sensor data of the technical system are received from, e.g., the technical system itself or a monitoring system applying the machine learning model onto measured sensor data received from the technical system. The measured sensor data preferably include those sensor data, which were used to train the received machine learning model.

In the next step M2, a number of synthetic sensor data z is generated by a synthetic data generator. Preferably, the values of the synthetic sensor data z are generated randomly and aligned to the distribution of the values of the measured sensor data. In step M3 labels L for the synthetic sensor data z and the measured sensor data x are predicted by inputting the synthetic sensor data ss and the measured sensor data x into the machine learning model F. The output of the machine learning model f provides the labels for the input data.

In step M4 a surrogate model g is trained based on the synthetic sensor data ss and measured sensor data x and the respective predicted labels. The surrogate model g is an intrinsically interpretable machine learning model, e.g., one of a Decision Tree model, a Generalized Linear Rule Model, a Logistic Regression, a Generalized Additive Model, if the machine learning model f is a classification model. If the machine leaning model f is a regression model, the surrogate model g is one of a Regression Tree model, Generalized Linear Rule Models, Linear regression, Generalized Additive Models. The surrogate model provides is intrinsically interpretable, e.g., by its structure as a tree showing the decision path taken for the input data and therefore provides an explanation of the global behaviour of the machine learning model F. An agreement accuracy ACC is calculated indicating a similarity of a result of the surrogate model g compared to a result of the machine learning model f, both processing the same synthetic sensor data ss and the same measured sensor data x, see, step M5. The trained surrogate model g and the agreement accuracy ACC is output to a user interface in step M6.

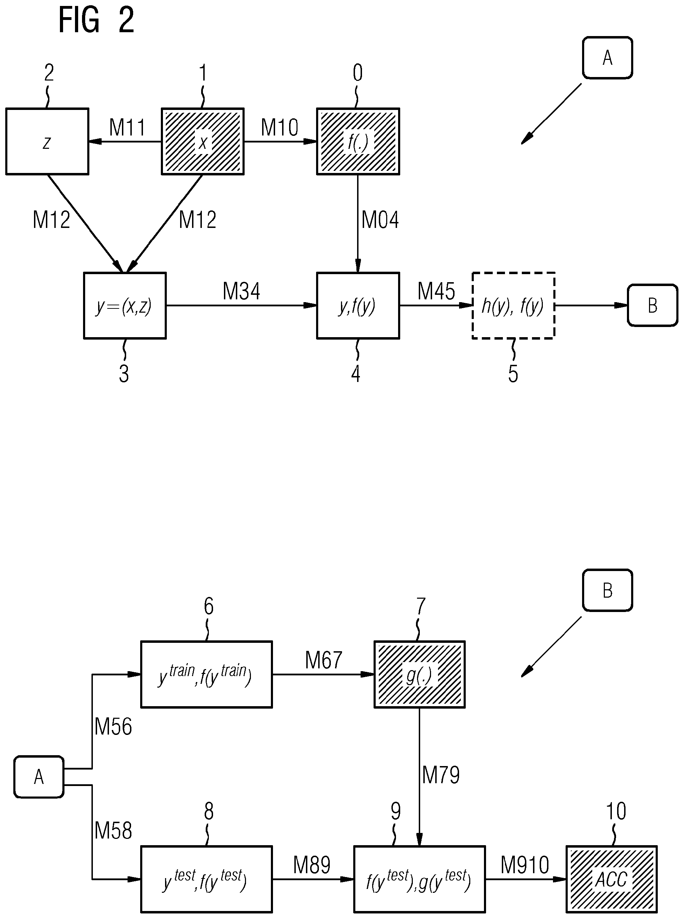

Fig. 2 shows in part A an embodiment of processing of sensor data and in part B an embodiment of processing of the surrogate model in more details as a flow diagram. Boxes represent data or machine learning models, arrows indicate a modification of data or models to achieve the resulting data or models.

The received measured sensor data 1 may comprise n instances of measured sensor data, e.g., each instance is measured at a different point in time. Each measure sensor data comprises values of a number of k different sensors, wherein each sensor measures a parameter of a technical system. The described embodiment provides only an example for structures of data and models and does not exclude others.

The measured sensor data 1 is structured as a data matrix $x = (x_1,...,x_n)$ of dimension ($n \times k$). The received machine learning model f, see reference sign 0, is trained by at least a subset of the received measured sensor data 1 and outputs a probability for, e.g., a failure or a type of failure of the technical system, see M10. In case of a classification model the received machine learning model $(x_i) = c_k$ outputs a classifier, where $c_k \in C$ and C being a set of different classes for an instance of a measured sensor data $x_i$ with i=1,...,n. E.g., output $c_1$ indicates 'no failure', $c_2$ indicates 'slight anomaly', $c_3$ indicates 'severe failure'. Else, in case a the received machine learning model is an regression model, a probability or score is outputted, see

$$f(x_i) = P(C = c_k).$$

Hence, both cases are effectively interchangeable.

The disclosed method is model-agnostic and is therefore not restricted to any classification model or regression model and the received machine learning method f(.) can be a Deep Neural Network, which is a supervised machine learning model, an Isolation Forest, which is an unsupervised machine learning model or any other suitable machine learning model that outputs a predicted class label or that outputs an anomaly score or an anomaly probability. The only restriction comes with the fact that we require the measured sensor data 1, x to be human-interpretable, but even this constraint can be overcome as described below.

As the received machine learning model 0, f is a black-box model its global behaviour is explored on received measured sensor data used for learning and on new sensor data points called synthetic sensor data. The synthetic sensor data is generated by a synthetic sensor data generator, e.g., applying Monte Carlo simulation, see M11. To align the synthetic sensor data z to a value distribution of the measured sensor data, the random variable X that 'generated' the data instances $x_i$ relates to a certain distribution

$$X \sim P_\theta$$

where $P_\theta$ is a probability distribution parametrized with parameters θ. If x consists of numeric values, it can be assumed (after suitable transformation) that

$$X \sim N_k(\mu, \Sigma)$$

i.e. the measured sensor data x is k-variate normally distributed with parameters θ=(μ,Σ) where a vector of expectations can be estimated via

$$\mu = \left( \frac{1}{n} \sum_i x_{i,1}, ..., \frac{1}{n} \sum_i x_{i,k} \right)$$

and the variance-covariance matrix is estimable via

$$\Sigma = \frac{1}{n-1} \sum_i (x_i - \mu)(x_i - \mu)^T$$

In case the measured sensor data 1 cannot be assumed to be normally distributed, any other distribution can be used to sample synthetic sensor data, e.g. multinomial distribution for binary variables, Poisson distribution for count data, etc. It is also possible to do Bootstrap, i.e., to apply non-parametric sampling in case of a specific parametric distribution. Alternatively various genetic algorithms can be applied in order to obtain synthetic sensor data of desirable properties, e.g., synthetic data that always or never leads to an anomaly. But this is free to choose and depends on the underlying data structures.

Next, a set of combined sensor data 3, are generated consisting of a combination of measured sensor data 1 and synthetic sensor data 2, see M12.

Given above definitions it is possible to sample synthetic sensor data instances $z=(z_1,...z_N)$ resulting in a matrix of dimension (N×k). E.g., 1000 draws from the multivariate normal distribution as defined above would result in a (1000× k) matrix, comprising data points that have not been used for training the received machine learning model f(.), but allow to explore the underlying received machine learning model f(.). This allows to evaluate whether the derived interpretations for the received machine learning model also hold for 'new' data points. The received measured sensor data x and the generated synthetic sensor data z are combined into combined sensor data y=(x,z), e.g., by stacking it row-wise.

The combined sensor data 3, y is handed-over to the received machine learning model 0, f(.), see arrow M34, for predicting labels for the synthetic sensor data z and the measured sensor data x. The synthetic sensor data z and the measured sensor data x are input to the received machine learning model 0, f(.) to derive labels for the combined sensor data 3, y, see M04. The output of the received machine learning model f(y) provides information on the technical system and therefore can be used as a prediction of labels for the respective input data. This results in combined sensor data with respective labels 5.

In order to further increase the interpretability of the received machine learning model, a function h(y) is defined that makes the combined sensor data y more interpretable, see M45. E.g., h(y) could extract Fast Fourier Transformation (FFT) coefficients of the measured sensor data x, if the combined sensor data y consists of multiple time series of sensor.

Next steps are illustrated by part B of Fig. 2. The combined labelled 4 or transformed sensor data 5 are randomly partitioned, see M58, M56, row-wise into surrogate test data $y^{test}$ and surrogate training data $y^{train}$ including their labels. I.e., in M56 a subset of the synthetic sensor data z is combined with a subset of measured sensor data x to form surrogate training data $y^{train}$ used for training the surrogate model 7, g(.), see M67. Depending on whether the received machine learning model $f(x_i)$ outputs a class or a score, a Decision Tree or a Regression Tree is applied as surrogate model g. In principle any other intrinsically interpretable model besides Decision Trees or Regression trees is possible, but tree-based algorithms are preferred because they are most human interpretable and have a simple local as well as a global interpretation. The surrogate model g is one of a Decision Tree model, a Generalized Linear Rule Model, a Logistic Regression, a Generalized Additive Model, if the machine learning model f is classification model, or the surrogate model g is one of a Regression Tree model, a Generalized Linear Rule Models, Linear regression, Generalized Additive Models (GAM), if the machine leaning model f is a regression model

I.e., in M 58 a different subset of synthetic sensor data z is combined with a different subset of measured sensor data x to form the surrogate test data $y^{test}$. The test data $y^{test}$ are used for calculating for an agreement accuracy ACC. To do so, the surrogate test data $y^{test}$ is input into the received machine learning model, see M89 and also input into the surrogate model, see M79. The agreement accuracy 10, ACC is calculated, see M910, by comparing the resulting output of the received machine learning model f(.) with the output of the surrogate model g(.), see 9.

To evaluate the robustness of the received machine learning model f and the surrogate model g with respect to a number N of synthetic sensor data and with respect to a predefined complexity d of the surrogate model g, the above-described steps are iteratively performed according to following rule: The complexity d, e.g., the depth of the decision tree used as surrogate model is set to a range of $d_{min}$ and $d_{max}$. The number N of synthetic sensor data is set to a range of $N_{min}$ and $N_{max}$, which is the minimal and maximal number of samples to draw from $P_\theta$. Calculate $\theta$ from x and define the function h(y), if the explanations should be in a transformed feature space. If not set h(y) to the identity function.

For d in $(d_{min},...,d_{max})$ do
For N in $(N_{min},....,N_{max})$ do

Sample N times from $P_\theta$ to obtain z
Combine x and z into y=(x,y)
Split y into $y^{test}$ (e.g., $(N^{test} = 0.3N)$ and $y^{train}$ (e.g., $N^{train} = 0.7N)$

Learn a g(.) on *h(y^{train}))* with labels *f(y^{train})* Score the accuracy

$$ACC(d, N) = \frac{1}{N^{test}} \sum_{i=0}^{N^{test}} I(f(y^{test}) = g(h(y^{test})))$$

, where I(condition)= 1, if the condition is true.

*ACC(d,N^{test})* is the agreement accuracy measuring how well the surrogate model g agrees with the received machine learning model.

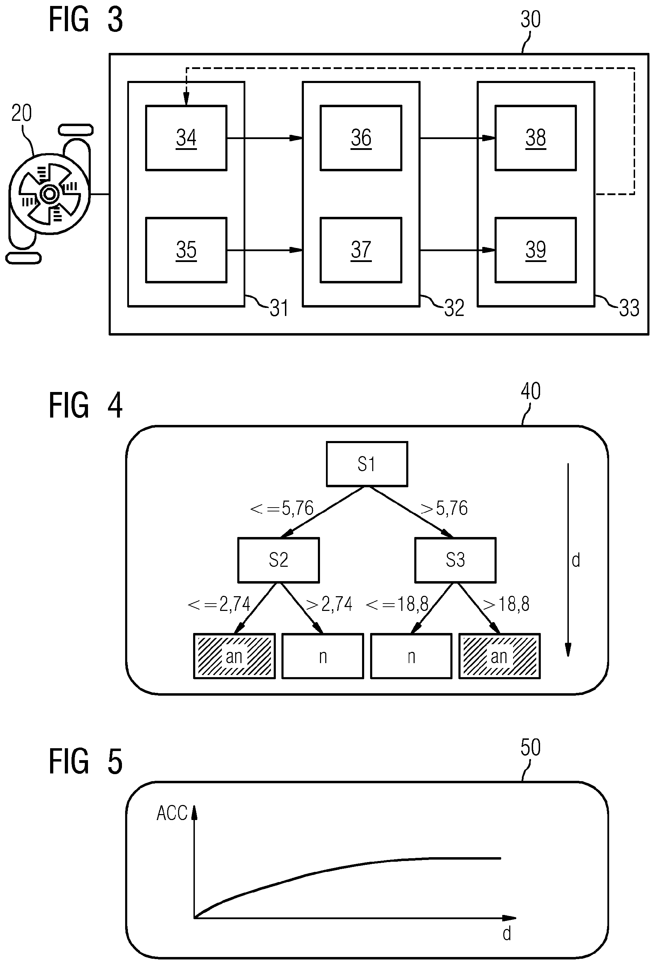

Fig. 3 shows an embodiment of the assistance apparatus 30 for providing information concerning a global behaviour of a machine learning model f trained with measured sensor data representing technical parameters of a technical system 20 and used to evaluate the technical system 20. The assistance apparatus 30 comprises an input interface 31, an evaluation unit 32 and a user interface 33. The input interface 31 in configured to receive the machine learning model and measured sensor data of the technical system 20. The machine learning model is stored in a model unit 34, the received measured sensor data are stored in data unit 35. The machine learning model is trained to evaluate the technical system, e.g., it is trained to provide a quality of a manufacturing process performed by the technical system or to provide information on the status of technical system 20 itself, e.g., detecting anormal behaviour of technical system 20. The technical system 20 is one of a device of a manufacturing plant, a device of an distribution system or any kind of machine, e.g., heavy machinery like a pump, a mill, a mechanic or electric drive.

The evaluation unit 32 comprises a synthetic data generator 36, which is configured to generate a number N of synthetic sensor data. The evaluation unit 32 further comprises a surrogate unit 37, which is configured to predict labels for the synthetic sensor data and the measured sensor data by the result of the machine learning model when processing the synthetic sensor data and the measured sensor data as input data. Further, the surrogate unit 37 is configured to train a surrogate model based on the synthetic sensor data and measured sensor data and the predicted labels, wherein the surrogate model is intrinsically interpretable and provides an explanation of the global behaviour of the machine learning model, and to calculate an agreement accuracy indicating the similarity of a result of the surrogate model compared to a result of the machine learning model both processing the same synthetic sensor data and the same measured sensor data.

The output interface 33 is configured to output the trained surrogate model and the agreement accuracy. E.g., the output interface is configured, as a Graphical user interface. Preferably, a visualization of the trained surrogate model 38 is output on the user interface 33 indicating a decision path for input measured sensor data or synthetic sensor data.

Fig. 4 shows an example visualization 40 of the trained surrogate model indicating a decision path for input measured sensor data or synthetic sensor data. The surrogate model is a decision tree with two layers. The complexity d of the decision tree depends on the number of layers, i.e., the number of decisions taken for a sensor data. The shown decision tree is of complexity two. In the shown example, leaf S1 passes sensor data with value larger than 5.67 to leaf S3 the decision tree, for other values to leaf S2. At leaf S2 sensor data values larger 2.74 are decided to show state "n", e.g., normal behaviour. Sensor data values equal or smaller than 2.74 leads to an output of state "an", e.g., abnormal behaviour. The decision tree approximates the decisions taken by the received machine learning model with an accuracy provided by the calculated agreement ACC.

The user interface of the assistance apparatus is configured to display a visualization of the agreement accuracy 39, preferably depending on a range of number of synthetic sensor data and/or range of complexity index d. Fig. 5 shows such a visualization for a specific surrogate model. Depending on the required proximity of the surrogate model and the received machine learning model, a user can select and input a complexity d of the surrogate model, which is used in parallel to the received machine learning model to interpret the output provided by the received machine learning model.

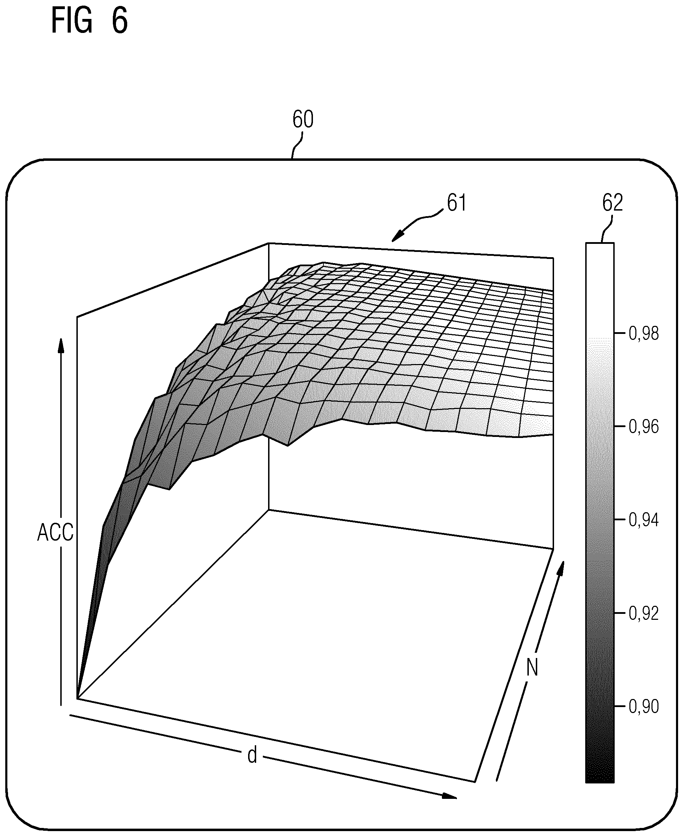

Fig. 6 shows a visualization 60 of the agreement accuracy of the trained surrogate model depending on the complexity d and the number of synthetic sensor data used to train and test the surrogate model. The value of agreement accuracy ACC can be colour coded to facilitate differentiating the various zones of high or low ACC values, see colour scale 62. Calculating, in the evaluation unit 32, the agreement accuracy ACC of the surrogate model for a range of complexity values d and a range of the number N of synthetic sensor data provides a surface in the space of N and d together with the corresponding agreement accuracy which allows to choose, e.g., the most simplistic explanation (d small) or, if necessary, a more complex but better fitting explanation (d high). The variation for the chosen level of model complexity with varying N shows in a transparent way how robust the explanation is with respect to changes of unexplored model areas. It also provides a transparent robustness check of the surrogate model if the number of unseen synthetic sensor data points increases. Given a suitable d-N combination, ACC(d,N) provides a measure how reliable the explanation is. As an example, an agreement accuracy ACC=0.9 of the surrogate model with complexity d=1 and number or synthetic sensor data N=1000 means that the complicated received machine learning model f can be approximated globally in 90% of all cases using the original data and 1000 draws of synthetic sensor data.

To interpret the received machine learning globally, the decision or regression tree provides a set of human-interpretable "if-then" rules that are easily interpretable. To interpret the received machine learning locally, i.e., for a given instances, it is only required to follow the "if-then" rules path for a certain instance to understand how a decision for a certain instance of measured sensor data point was reached. The extracted surrogate model can be interpreted as a compressed version of the complicated underlying received machine learning model.

An optimization parameter can be derived from the surrogate model and the agreement accuracy. The derived optimization parameter can be applied to the machine learning model generating an improved machine learning model and applying the improved machine learning model to currently measured sensor data. The optimization parameter can be derived by the assistance apparatus based on the determined surrogate model and its parameters. Optionally additional input of the user via the user interface is taken into account. This is indicated by the dashed arrow in Fig. 3. In an embodiment, the received machine learning model is trained and optimized in the assistance apparatus 11.

In a further embodiment, currently measured sensor data are received in the assistance apparatus 30 and the result of the machine learning model and the result of the trained surrogate model is output, wherein both processing the currently measured sensor data as input. The assistance apparatus provides an online evaluation of the technical system combined with a human-interpretable information on the reason for the provided output.

In a further embodiment, the assistance apparatus 30 applies the surrogate model instead of the received machine learning model and outputs the result of the trained surrogate model instead of the machine learning model with the currently measured sensor data as input.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

**Claims**

1. Computer-implemented method for providing information concerning a global behaviour of a machine learning model (f) trained with measured sensor data representing technical parameters of a technical system (20) and used to evaluate the technical system, comprising

    - receiving (M1) the machine learning model (f) and measured sensor data (x) of the technical system (20)
    - generating (M2) a number (N) of synthetic sensor data (z) by a synthetic data generator (36),
    - predicting (M3) labels (L) for the synthetic sensor data (z) and the measured sensor data (x) by the result of the machine learning model (f) when processing the synthetic sensor data (z) and the measured sensor data (x) as input data,
    - training (M4) a surrogate model based on the synthetic sensor data (z) and measured sensor data (x) and the predicted labels, wherein the surrogate model (g) is intrinsically interpretable and provides an explanation of the global behaviour of the machine learning model (f),
    - calculating (M5) an agreement accuracy (ACC) indicating the similarity of a result of the surrogate model (g) compared to a result of the machine learning model (f) both processing the same synthetic sensor data (z) and the same measured sensor data(x),
    - outputting (M6) to a user interface (33) the trained surrogate model (g) and the agreement accuracy (ACC).

2. Method according to the preceding claim, wherein the synthetic sensor data (z) are generated randomly and adapted with a distribution of the measured sensor data (x).

3. Method according to any of the preceding claims, wherein a subset of the number (N) of synthetic sensor data (z) is combined with a subset of measured sensor data (x) to form surrogate training data (ytrain) used for training the surrogate model (g).

4. Method according to claim 3, wherein different subset of the number (N) of synthetic sensor data (z) is combined with a different subset of measured sensor data (x) to form surrogate test data (ytest) used for calculating the agreement accuracy (ACC).

5. Method according to claim 3 and 4, wherein the surrogate training data (ytrain) and surrogate test data (ytest) is transformed into an interpretable form of the sensor data.

6. Method according to any of the claims 3-5, wherein the surrogate model (g) and the agreement accuracy (ACC) is calculated and output for a varied number (N) of generated synthetic sensor data (z).

7. Method according to any of the preceding claims, wherein the surrogate model (g) is configured to comply with a predefined complexity index (d) and the surrogate model (g) is trained and the agreement accuracy (ACC) is calculated for different predefined complexity index (d) and output to the user interface (33).

8. Method according to any of the preceding claims, wherein the surrogate model (g) is one of a Decision Tree model, a Generalized Linear Rule Model, a Logistic Regression, a Generalized Additive Model, if the machine learning model (f) is classification model, or the surrogate model (g) is one of a Regression Tree model, a Generalized Linear Rule Models, Linear regression, Generalized Additive Models (GAM), if the machine leaning model (f) is a regression model.

9. Method according to any of the preceding claims, wherein outputting to a user interface (33) a visualization of the trained surrogate model (g) indicating a decision path for an input measured sensor data (x) or synthetic sensor data (z).

10. Method according to any of the preceding claims, wherein outputting to a user interface a visualization of the agreement accuracy (ACC), preferably depending on a range of number of synthetic sensor data and/or range of complexity index (d) .

11. Method according to any of the preceding claims, wherein deriving an optimization parameter from the surrogate model and the agreement accuracy and applying the derived optimization parameter to the machine learning model generating an improved machine learning model and applying the improved ML model to currently measured sensor data.

12. Method according to any of the preceding claims 1-10, wherein receiving a currently measured sensor data (x) and outputting the result of the machine learning model (f) and the trained surrogate model (g) both processed with the currently measured sensor data as input.

13. Method according to any of the preceding claims 1-10, wherein receiving a currently measured sensor data, and outputting the result of the trained surrogate model (g) instead of the machine learning model (f) with the currently measured sensor data as input.

14. Method according to the preceding claim, wherein the machine learning model (f) is applied to detect anormal behaviour of the technical system (33) and the technical system (20) is one of a device of a manufacturing plant, a device of an distribution system or any kind of machine.

15. Assistance apparatus for providing information concerning a global behaviour of a machine learning model (f) trained with measured sensor data representing technical parameters of a technical system (19) and used to evaluate the technical system (20), comprising at least one processor configured to perform the steps

   - receiving (S1) the machine learning model (f) and measured sensor data (x) of the technical system (20),
   - generating (S2) a number (N) of synthetic sensor data (z) by a synthetic data generator (13),
   - predicting (S3) labels for the synthetic sensor data (z) and the measured sensor data (x) by the result of the machine learning model (f) when processing the synthetic sensor data (z) and the measured sensor data (x) as input data,
   - training (S4) a surrogate model based on the synthetic sensor data (z) and measured sensor data (x) and the predicted labels, wherein the surrogate model (g) is intrinsically interpretable and provides an explanation of the global behaviour of the machine learning model (f),
   - calculating (S5) an agreement accuracy (ACC) indicating the similarity of a result of the surrogate model (g) compared to a result of the machine learning model (f) both processing the same synthetic sensor data (z) and the same measured sensor data (x),
   - outputting (S6) to a user interface (33) the trained surrogate model (g) and the agreement accuracy (ACC).

16. A computer program product directly loadable into the internal memory of a digital computer, comprising software code portions for performing the steps of claims 1 to 14 when said product is run on said digital computer.

FIG 1

# FIG 2

## FIG 3

30

20

31  32  33

34  36  38

35  37  39

## FIG 4

40

S1

<=5,76    >5,76

S2                    S3

<=2,74    >2,74    <=18,8    >18,8

an    n    n    an

d

## FIG 5

50

ACC

d

FIG 6

60

61

62

ACC

0,98

0,96

0,94

0,92

0,90

N

d

Europäisches
Patentamt

European
Patent Office

Office européen
des brevets

# EUROPEAN SEARCH REPORT

**Application Number**

**EP 21 18 7876**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | K. N. RAMAMURTHY ET AL.: "Model Agnostic Multilevel Explanations", ARXIV.ORG, CORNELL UNIVERSITY LIBRARY, 201 OLIN LIBRARY CORNELL UNIVERSITY ITHACA, NY 14853, 12 March 2020 (2020-03-12), XP081620735, * Sections 1, 3, 3.1, 4.1, 4.3, 4.4. * * figures 1, 2, 9 * ----- | 1-16 | INV. G06N20/00 ADD. G06N5/00 |
| L | M. T. RIBEIRO ET AL.: ""Why Should I Trust You?" Explaining the Predictions of Any Classifier", PROCEEDINGS OF THE 22ND ACM SIGKDD INTERNATIONAL CONFERENCE ON KNOWLEDGE DISCOVERY AND DATA MINING, 13 August 2016 (2016-08-13), pages 1135-1144, XP058631176, DOI: 10.1145/2939672.2939778 ISBN: 978-1-4503-4918-5 * This document completes the disclosure of XP081620735 with respect to the LIME method. * * Sections 3 and 6 * ----- | | |
| A | US 2018/018590 A1 (NANTOMICS INC [US]) 18 January 2018 (2018-01-18) * paragraphs [0055], [0074] * ----- | 2 | |

**TECHNICAL FIELDS SEARCHED (IPC)**

G06N

The present search report has been drawn up for all claims

| Place of search | Date of completion of the search | Examiner |
|---|---|---|
| The Hague | 4 February 2022 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 7876

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2022

| Patent document cited in search report | Publication date | Patent family member(s) | Publication date |
|---|---|---|---|
| US 2018018590 A1 | 18-01-2018 | AU 2017300259 A1 | 14-02-2019 |
| | | CA 3031067 A1 | 25-01-2018 |
| | | CN 109716346 A | 03-05-2019 |
| | | EP 3485436 A1 | 22-05-2019 |
| | | JP 2019526851 A | 19-09-2019 |
| | | KR 20190032433 A | 27-03-2019 |
| | | SG 11201900220R A | 27-02-2019 |
| | | TW 201812646 A | 01-04-2018 |
| | | US 2018018590 A1 | 18-01-2018 |
| | | WO 2018017467 A1 | 25-01-2018 |

EPO FORM P0459

For more details about this annex : see Official Journal of the European Patent Office, No. 12/82